# EUROPEAN PATENT APPLICATION

(11) **EP 4 231 615 A1**
(43) Date of publication of application: **23.08.2023**
(21) Application number: 22157521.0
(22) Date of filing: 18.02.2022
(51) Int. Cl.: H04M 1/72412, H04M 1/60

(54) **USER DEVICE NOTIFICATIONS**

(71) Applicant: Nokia Technologies Oy, 02610 Espoo (FI)
(72) Inventor: LAAKSONEN, Lasse Juhani, Tampere (FI); VILERMO, Miikka Tapani, Siuro (FI); LEHTINIEMI, Arto Juhani, Lempäälä (FI)
(74) Representative: Nokia EPO representatives

(57) **Abstract**

An apparatus, method and computer program is described comprising: providing a first notification on a first user device, wherein the first notification relates to a first trigger event; in the event that the first notification has expired, determining whether a second user device is activated or connected for use with the first user device; and in response to determining that the second user device is activated, providing a second notification on one or more of the first user device and the second user device, wherein the second notification relates to said first trigger event.

## Description

### Field

The present specification relates to notifications on user devices, such as mobile communication devices.

### Background

It is known to provide notifications in user devices for various events. There remains a need for improvement in how notifications are provided.

### Summary

In a first aspect, this specification provides an apparatus comprising means for performing: providing a first notification on a first user device, wherein the first notification relates to a first trigger event; in the event that the first notification has expired, determining whether a second user device (or at least part of the second user device) is activated or connected for use with the first user device; and in response to determining that the second user device is activated, providing a second notification on one or more of the first user device or the second user device, wherein the second notification relates to said first trigger event.

In some examples, determining whether the second user device is activated or connected for use with the first user device comprises monitoring the second user device for a first time period after said provision of the first notification or after said expiry of the first notification.

In some examples, the second notification comprises a modification of the first notification. For example, said modification relates to use of the second user device.

In some examples, the second notification comprises one or more actions to be performed in response to the first trigger event.

In some examples, the first trigger event relates to at least one of a call, a message, a meeting, a navigation suggestion, or an application trigger event.

In some examples, the second user device comprises one or more accessory devices linked to the first user device. For example, the one or more accessory devices comprises one or more of headphones, a smartwatch, a virtual reality headset, a webcam, or microphone(s).

In some examples, the first trigger event relates to a call or a meeting; the second user device comprises one or more of headphones, microphone, or a webcam; and the second notification is presented in response to determining that one or more of the headphones, microphone, and webcam has been activated or connected for use with the first user device.

In some examples, the first trigger event relates to a navigation suggestion to a location of interest; the second user device comprises one or more of a virtual reality headset, or headphones; and the said second notification is presented in response to determining that one or more of the virtual reality headset or headphones have been activated or connected for use with the first user device, wherein the second notification comprises navigation information of the location of interest.

In some examples, the first event relates to a physical activity or health-related event; the second user device comprises a smartwatch, the smartwatch being suitable for monitoring physical activity; and the second notification is presented in response to determining that the smartwatch has been activated or connected for use with the first user device.

In some examples, the second user device is associated the first trigger event, such that the second user device is usable for interaction with the first trigger event. Thus, for example, a user device that is not usable for interaction with the first trigger event may not trigger the provision of the second notification.

The said means comprises at least one processor; and at least one memory including computer program code, the at least one memory and computer program code configured to, with the at least one processor, cause the performance of the apparatus.

In a second aspect, this specification describes a method comprising: providing a first notification on a first user device, wherein the first notification relates to a first trigger event; in the event that the first notification has expired, determining whether a second user device is activated or connected for use with the first user device; and in response to determining that the second user device is activated, providing a second notification on one or more of the first user device or the second user device, wherein the second notification relates to said first trigger event.

In some examples, determining whether the second user device is activated or connected for use with the first user device comprises monitoring the second user device for a first time period after said provision of the first notification or after said expiry of the first notification. In some examples, the second notification comprises a modification of the first notification. For example, said modification relates to use of the second user device.

In some examples, the second notification comprises one or more actions to be performed in response to the first trigger event.

In some examples, the first trigger event relates to at least one of a call, a message, a meeting, a navigation suggestion, or an application trigger event.

In some examples, the second user device comprises one or more accessory devices linked to the first user device. For example, the one or more accessory devices comprises one or more of headphones, a smartwatch, a virtual reality headset, a webcam, or microphone(s).

In some examples, the first trigger event relates to a call or a meeting; the second user device comprises one or more of headphones, microphone, or a webcam; and the second notification is presented in response to determining that one or more of the headphones, microphone, and webcam has been activated or connected for use with the first user device.

In some examples, the first trigger event relates to a navigation suggestion to a location of interest; the second user device comprises one or more of a virtual reality headset, or headphones; and the said second notification is presented in response to determining that one or more of the virtual reality headset or headphones have been activated or connected for use with the first user device, wherein the second notification comprises navigation information of the location of interest.

In some examples, the first event relates to a physical activity or health-related event; the second user device comprises a smartwatch, the smartwatch being suitable for monitoring physical activity; and the second notification is presented in response to determining that the smartwatch has been activated or connected for use with the first user device.

In some examples, the second user device is associated the first trigger event, such that the second user device is usable for interaction with the first trigger event.

In a third aspect, this specification describes an apparatus configured to perform any method as described with reference to the second aspect.

In a fourth aspect, this specification describes computer-readable instructions which, when executed by computing apparatus, cause the computing apparatus to perform any method as described with reference to the second aspect.

In a fifth aspect, this specification describes a computer program comprising instructions for causing an apparatus to perform at least the following: providing a first notification on a first user device, wherein the first notification relates to a first trigger event; in the event that the first notification has expired, determining whether a second user device is activated or connected for use with the first user device; and in response to determining that the second user device is activated, providing a second notification on one or more of the first user device or the second user device, wherein the second notification relates to said first trigger event.

In a sixth aspect, this specification describes a computer-readable medium (such as a non-transitory computer-readable medium) comprising program instructions stored thereon for performing at least the following: providing a first notification on a first user device, wherein the first notification relates to a first trigger event; in the event that the first notification has expired, determining whether a second user device is activated or connected for use with the first user device; and in response to determining that the second user device is activated, providing a second notification on one or more of the first user device or the second user device, wherein the second notification relates to said first trigger event.

In a seventh aspect, this specification describes an apparatus comprising: at least one processor; and at least one memory including computer program code which, when executed by the at least one processor, causes the apparatus to: provide a first notification on a first user device, wherein the first notification relates to a first trigger event; in the event that the first notification has expired, determine whether a second user device is activated or connected for use with the first user device; and in response to determining that the second user device is activated, provide a second notification on one or more of the first user device or the second user device, wherein the second notification relates to said first trigger event.

In an eighth aspect, this specification describes an apparatus comprising: a first module configured to provide a first notification on a first user device, wherein the first notification relates to a first trigger event; a second module configured to determine whether a second user device is activated or connected for use with the first user device in the event that the first notification has expired; and a third module configured to provide a second notification on one or more of the first user device or the second user device in response to determining that the second user device is activated, wherein the second notification relates to said first trigger event.

### Brief description of the drawings

Example embodiments will now be described, by way of example only, with reference to the following schematic drawings, in which:
FIGs. 1 and 2 are block diagrams of systems in accordance with example embodiments;
FIG. 3 is a flowchart of an algorithm in accordance with an example embodiment;
FIGs. 4 to 7 are block diagrams of systems in accordance with example embodiments;
FIG. 8 is a block diagram of components of a system in accordance with an example embodiment; and
FIG. 9 shows an example of tangible media for storing computer-readable code which when run by a computer may perform methods according to example embodiments described above.

### Detailed description

The scope of protection sought for various embodiments of the invention is set out by the independent claims. The embodiments and features, if any, described in the specification that do not fall under the scope of the independent claims are to be interpreted as examples useful for understanding various embodiments of the invention.

In the description and drawings, like reference numerals refer to like elements throughout.

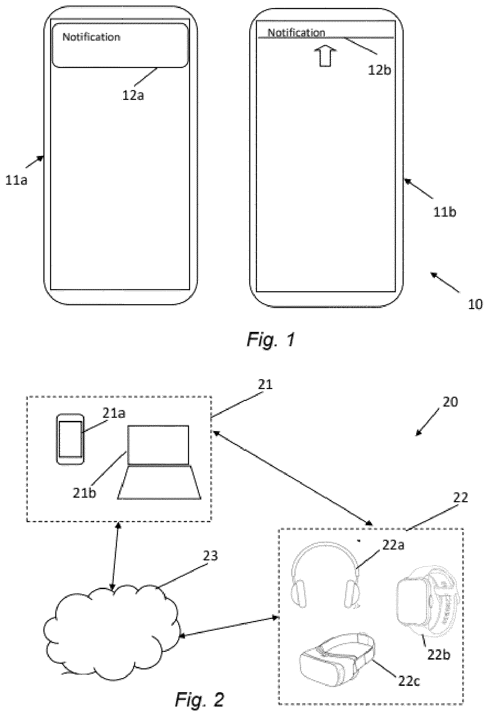

FIG. 1 is a block diagram of a system, indicated generally by the reference numeral 10, in accordance with an example embodiment. The system 10 shows a user device 11, where the reference numeral 11a is used for representing the user device at a first time instance, and the reference numeral 11b is used for representing the user device at a second time instance. A notification, such as the notification 12a may be provided at the user device 11a at the first time instance. In general, when no interaction is received from a user, such notifications (e.g. pop-up notification, message notification, call notification, calendar notification, application notification, or the like) may expire after a certain time period. For example, the notification may expire by disappearing from the screen of the user device, as shown in user device 11b, where the notification 12b slides up and disappears from the screen of the user device 11b (as indicated schematically in FIG. 1 using an arrow).

The notification may remain in a notification centre of the user device for the user to access subsequently, or if the notification is a call, the notification may become a missed call notification. Alternatively, if the notification is a non-visual notification, the expiry of the notification may comprise the notification ceasing to be provided or presented at the first user device. In most cases, if the notification expires, it may be cumbersome for a user to find the notification (e.g. from the notification centre) once they are ready to respond to or otherwise interact with the notification. Alternatively, if the notification stays on the screen for a longer period of time, the user may have more time to interact with the notification, but it may not be ideal if the notification staying on the screen for a longer time is an unwanted notification.

FIG. 2 is a block diagram of a system, indicated generally by the reference numeral 20, in accordance with an example embodiment. The system 20 comprises one or more first user devices 21, one or more second user devices 22, and a network 23. For example, the first user devices 21 may comprise devices such as a mobile communications device (e.g. a phone, smartphone) 21a, laptop 21b, or any other user device (e.g. tablet, desktop computer) that a user may use for communication, work, or the like. The second user devices 22 may comprise accessory devices, such as headphones 22a (or, for example, other audio devices such as earphones, earbuds, external audio speaker device or the like), smartwatch 22b, virtual or augmented reality headset 22c, or any other accessory devices that a user may use in conjunction with one or more of the first user devices 21. Any of the first user devices 21 may be paired with any of the second user devices 22 either via a direct wired or wireless connection (e.g. Bluetooth^{™}, Wi-Fi^{™}, near field communication (NFC), or other local connection) or through the network 23 (e.g. interconnected networks).

In some examples, a user may use one or more accessory devices 22 in order to be ready for responding to a notification. For example, if the notification on a first user device 21 (e.g. phone or laptop) relates to an upcoming meeting (e.g. audio or video meeting), the user may wish to communicate in the meeting using a second user device 22 (e.g. headphones 22a), and may not be ready to join the meeting unless the headphones are connected to the first user device and/or the user is wearing the headphones.

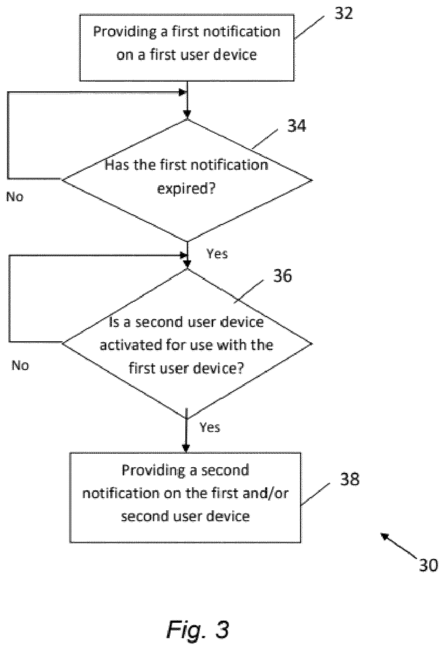

FIG. 3 is a flowchart of an algorithm, indicated generally by the reference numeral 30, in accordance with an example embodiment. The algorithm 30 starts with operation 32, where a first notification is provided on a first user device (such as one of the first user devices 21a, 21b). The first notification may relate to a first trigger event. For example, the first trigger event may relate to at least one of a call, a message, a meeting, a navigation suggestion, an application trigger event, or the like. Further examples of trigger events include a communication event (e.g. incoming message (text, audio, or video message), an incoming voice call, an incoming video call, or the like), a calendar event, a content sharing event, a content streaming event, alarm notifications, etc. In one example, the provision of the first notification at the first user device may be performed by a server, such as servers linked to any applications or functionalities of the first user device. Alternatively, or in addition, the provision of the first notification may be performed locally by an application of the user device, such that a server may not be involved.

At operation 34, a determination is made regarding whether the first notification has expired. For example, the first notification may expire if no response is received from a user of the first user device in relation to the first notification within a predefined time period. In some examples, the notification may expire by disappearing from the screen (e.g. presentation of a pop up notification is removed from the screen) of the first user device, such that the presentation of the notification expires. The notification may still be stored in a notification centre (e.g. accessible by navigating to the notification centre, for example by swiping or dragging from the top of the screen in a smartphone, or using other ways of navigating in user devices such as laptops, tablets, or the like). Alternatively, or in addition, the notification may expire by disappearing from the screen, and/or being removed from the notification centre. For example, a notification for a call may expire when the call becomes a missed call.

In one example embodiment, if the first notification has not expired, the algorithm 30 may continue monitoring whether the first notification has expired, and moves to operation 36 once the first notification has expired.

In the event that the first notification has expired, the algorithm 30 moves to operation 36, and determines whether a second user device (such as one of the second user devices 22a, 22b, or 22c) or at least part of the second user device is activated (e.g. changed by the user from an inactive state to an active state) or connected for use with the first user device. The second user device may be associated with said first trigger event, such that the second user device is usable for interaction with the first trigger event. For example, a second user device, such as the headphones 22a maybe associated with trigger events such as calls, meetings, or the like, as headphones 22a may be used as an audio device for listening and/or speaking in calls or meetings. Alternatively, a virtual or augmented reality headset 22c (or smart glasses) may be associated with a trigger event related to navigation suggestions, and a smartwatch 22b (or fitness tracker) may be related to trigger events related to sports, exercise, or health. As such, the second notification may not be displayed in response to activation or connection of a second user device that is not associated with the first trigger event. In this example, if the trigger event is a call, meeting, or the like, turning on a virtual or augmented reality headset may not cause the second notification to be displayed. In another example, turning on a virtual or augmented reality headset may cause the second notification to be displayed if the headset is associated with trigger events such as calls, meeting, or the like. Other examples of trigger events and second user devices that are associated, or are not associated with the first user device, are possible.

In one example, a second user device may be associated with a particular trigger event by way of a setting in the first user device (e.g. a predefined setting configured by a user of the first user device). Alternatively, or in addition, when a second user device is connected or activated for use with the first user device, the first user device may determine the type of the second user device (e.g. audio device, fitness tracker, or virtual reality device), and determine that the second user device may be associated with the particular trigger event by being able to assist the user to engage with the trigger event (e.g. audio devices used for engaging with calls or meetings, or fitness trackers used for engaging with sports, exercise, or health related events).

In an example embodiment, the determining of operation 36 comprises monitoring the second user device for a first time period after said provision of the first notification or after said expiry of the first notification. For example monitoring the second user device may comprise monitoring whether the second user device has been turned on, or has been paired or linked with the first user device, or has been worn by the user so that the second user device is ready to be used by the user for interaction for the first trigger event. In one example, if the second user device has not been activated or connected to the first user device, the algorithm 30 may repeat the determining step 36, by continuing monitoring the second user device or monitoring a connection to the second user device periodically, at least for an extended time period. Alternatively, or in addition, the determining of operation 36 may comprise monitoring connections of the first user device periodically or for a second time period after said provision of the first notification or after said expiry of the first notification. For example, connections of the first user device may be monitored such that, when a second user device is connected to the first user device and/or is available for connection to the first user device, the determination is made that the second user device has been activated or connected for use with the first user device.

In response to determining that of the second user device is activated or connected, the algorithm 30 moves to operation 38, where a second notification is provided on one or more of the first user device and the second user device, wherein the second notification relates to said first trigger event. In an example, when the second user device is activated or connected, a determination may be made regarding whether the second user device is related to the first trigger event, and in response to such determination, the second notification may be provided. In one example, the second user device may be activated by turning on the second user device and/or may be connected by activating a connection of the second user device with the first user device (e.g. by linking or pairing).

In an example embodiment, the operations of algorithm 30 may be performed by an apparatus comprising means for performing said operations. In one example, the apparatus may be the first user device, such that the operations of algorithm 30 are performed locally at the first user device. Alternatively, the apparatus may be a server (e.g. a remote server, a cloud server) that may be able to cause the operations of algorithm 30 to be performed so as to configure the first and/or second notifications to be provided at the first user device.

In an example embodiment, in the event that there are a plurality of expired 'first notifications', a plurality of respective second notifications maybe provided in response to determining that second user device(s) associated to trigger event(s) relating to the plurality of first notifications. In one example, the plurality of respective second notifications are provided according to an order in which the plurality of corresponding first notifications are received. For example, a plurality of first notifications are received in the following order: a first call notification, a first navigation notification, and a first meeting notification. The plurality of second notifications are therefore also received in the following order: a second call notification, a second navigation notification, and a second meeting notification. Alternatively, the plurality of respective second notifications may be provided according to a reverse order in which the plurality of corresponding first notifications are received, such that the last received first notification is provided as a first received second notification. The plurality of second notifications (corresponding to the first notifications received in the order described above) may therefore be received in the reverse order: a second meeting notification, a second navigation notification, and a second call notification. Alternatively, or in addition, the plurality of respective second notifications may be provided according to a priority setting (e.g. default setting or defined by the user). For example, meetings may be at a higher priority compared to calls, and therefore the second meeting notification may be provided before the second call notification.

In an example embodiment, the first notification and/or the second notification can be any one or more of an audio notification, a vibration notification, or visual notification. The first notification and second notification may be of the same type or different types. The first notification and the second notification is such that a user may understand that the first and second notification is associated with the first trigger event or an action relating to the first trigger event.

In an example embodiment, the second notification may be the same as the first notification. For example, the first notification may be a pop-up notification relating to a meeting scheduled on a calendar, and once activation of the second user device is detected, the pop-up notification may be presented again by providing the second notification, where the second notification is related to the same meeting on the calendar.

In another example embodiment, the second notification comprises a modification of the first notification.

In one example embodiment, the modification of the first notification relates to use of the second user device. The second notification may comprise the contents of the first notification, and may further comprise one or more actions related to the use of the second user device. For example, if the second user device comprises headphones, the one or more actions may relate to the pairing of the headphones with the first user device, the volume of the headphones, sound mode of headphones (e.g. noise cancelling enabled or disabled), or the like.

In another example embodiment, the second notification of the first notification comprises one or more actions to be performed in response to the first trigger event. For example, if the first notification was a call, the second notification may comprise an indication of a missed call and one or more proposed actions to be performed in response to the missed call, such as contacting the caller by a call, message, or the like.

In an example embodiment, the second user device comprises one or more accessories linked to the first user device. As described above with reference to FIG. 2, one or more second user devices 22 may be linked to one or more of the first user devices 21 via wired or wireless connections. The one or more accessories may comprise one or more of headphones, an external audio speaker device, a smartwatch, a virtual reality headset, a webcam, and or microphone(s) and/or the like.

In an example embodiment, the first trigger event (e.g. the first and second notifications relating to the first trigger event) relates to an application trigger event. For example, an application trigger event may be related to any applications installed in the first user device, such as, music applications, game applications, social media applications, audio or video streaming applications, or the like. The application trigger event may also be related to any reminders generated by any applications installed in the first user device.

For example, the first user device may have a music application installed and running, but the music may not be playing or may be paused. A first trigger event, which is an application trigger event, may relate to a first notification notifying about a new song or album being released or becoming available on the music application. After the first notification expires, in the event that a second user device, such as headphones (or any audio device), is determined to be connected or activated for use with the first user device, a second notification relating to the application trigger event may be provided. For example, the second notification may comprise a pop-up notification on the first user device, or an audio notification on the second user device saying "Do you want to listen to the new song or album now?". The user may then interact with the second notification (e.g. by clicking 'yes' on the pop-up notification, or saying 'yes' into the mic of the second user device).

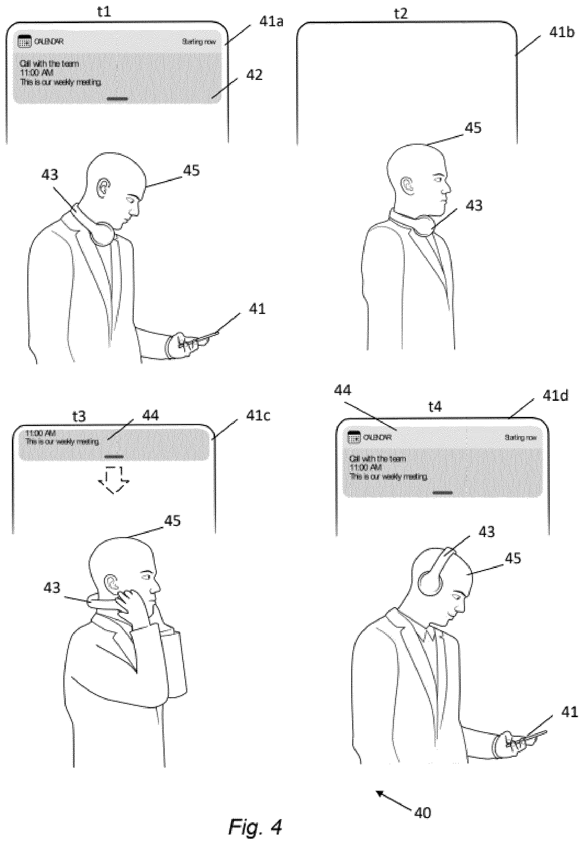

In an example embodiment, the first trigger event (e.g. the first and second notifications relating to the first trigger event) relates to a call or a meeting. In such cases, the second user device may comprise one or more of headphones, microphone, and a webcam, or any other accessories that may be used for calls or meetings or other types of audio or video conferences. As such, the second notification maybe presented in response to determining that one or more of the headphones, microphone, and webcam has been activated or connected. An example of such a trigger event is described below with reference to FIG. 4.

FIG. 4 is a block diagram of a system, indicated generally by the reference numeral 40, in accordance with an example embodiment. The system 40 shows a user 45 using a first user device 41 (e.g. a smartphone), wherein a screen of the first user device 41 is represented at time instances ti, t2, t3, and t4 by reference numerals 41a, 41b, 41c, and 41d respectively. At time t1, a first notification 42 is provided at screen 41a of the first user device 41. The first notification 42 relates to a first trigger event, where the first trigger event relates to a meeting (e.g. scheduled on a calendar); the providing of the first notification 42 is therefore an example of the operation 32 of the algorithm 30 described above.

The user 45 may have a second user device 43 (e.g. headphones and/or headphones with integrated microphone) where the second user device 43 may be linked to the first user device 41. At time t1, the user 45 may not be ready to interact with the first notification 42 (e.g. join the meeting), and as a result, the first notification 42 expires, as shown in screen 41b at time t2. The first notification 42 may expire by being removed from the screen, as shown in screen 41b. The expiry of the first notification 42 is an example of the operation 34 of the algorithm 30.

At time t3, the user 45 may activate or connect the second user device 43 (headphones), for example, by turning on the second user device 43, and/or linking or pairing the second user device 43 with the first user device 41. In response to the second user device 43 being activated or connect, provision of a second notification 44 is initiated, as shown in screen 41c of the first user device 41. For example, the user 45 may wish to use the headphones as an audio device for the meeting, and it may be desirable to have the headphones ready (e.g. turned on and/or linked) before joining the meeting.

The provision of the second notification 44 is an example of the operation 38 of the algorithm 30.

At time t4, as seen from screen 41d, the second notification 44 is provided on the first user device 41, such that the user 45 may interact with the second notification 44 and, for example, join the meeting by clicking the second notification 44. The second notification 44 may be the same as the first notification 42, or may be a modified version of the first notification 42. For example, the first notification 42 showed that the meeting start time is 'now', as the first notification 42 may have been displayed at a time (t1) when the meeting was actually scheduled. The second notification 44 shows the meeting start time as 11:00am, which is likely to be in the past, but as the meeting may be ongoing, the user 45 may still join the meeting by interacting with the second notification 44.

The above example embodiment may be useful, for example, when the user 45 is in a public place or a place with some background noise. A calendar notification (first notification 42) to join an online meeting is received, but the user may wish to finish another task before joining the online meeting, or may wish to wear and/or activate or connect the headphones (e.g. for audio and/or noise cancelling) before joining the meeting, while the calendar notification may expire. Once the user has the headphones ready (worn, activated, and/or connected), the second notification 44 is provided to assist the user to join the meeting such that the user may now join the online meeting by interacting with the second notification 44. The benefit of this may be that the user is able to join the online meeting quicker without having to manually open the calendar event or the notification or the online meeting application where user controls for joining the online meeting with a meeting application typically would be.

In another example, the notification 44 may instead, or in addition to, be provided audibly with options for actions for the user. For example, once the user has the headphones ready (worn, activated, and/or connected), the second notification 44 is output audibly through the headphones with a question of "Do you want to join the meeting now?". If the user replies "yes", the meeting application is activated and the user joins the meeting.

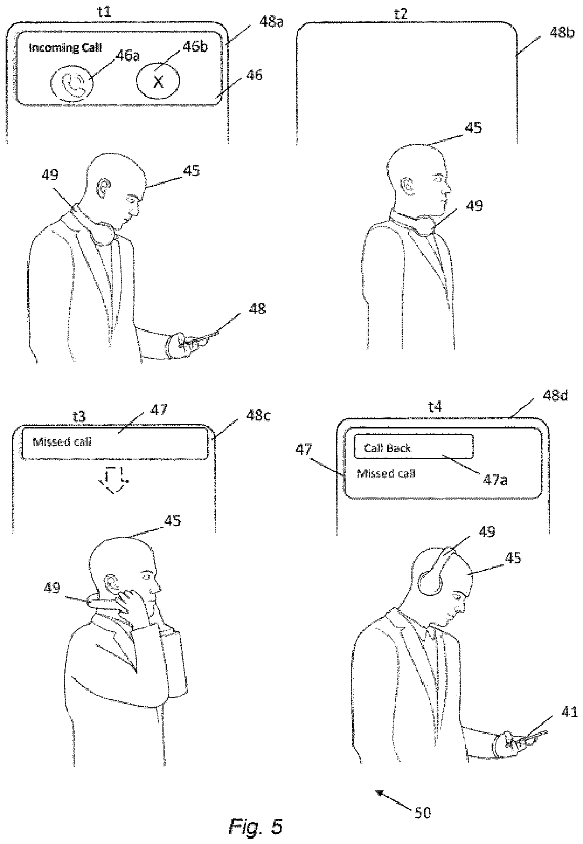

FIG. 5 is a block diagram of a system, indicated generally by the reference numeral 50, in accordance with an example embodiment. The system 50 shows a user 45 using a first user device 48 (e.g. a smartphone) (e.g. similar to the user 45 using first user device 41 described above with reference to FIG. 4), wherein a screen of the first user device 48 is represented at time instances t1, t2, t3, and t4 by reference numerals 48a, 48b, 48c, and 48d respectively. At time t1, a first notification 46 is provided at screen 48a of the first user device 41. The first notification 46 relates to a first trigger event, where the first trigger event relates to a call (e.g. an incoming call). The first notification 46 may comprise proposed actions of answering the call, for example, by interacting with the element 46a or declining the call, for example, by interacting with the element 46b; the providing of the first notification 46 is therefore an example of the operation 32 of the algorithm 30 described above.

The user 45 may have a second user device 49 (e.g. external audio speaker device, headphones and/or headphones with integrated microphone, similar to the second user device 43 described above with reference to FIG. 4) where the second user device 49 may be linked to the first user device 48. At time t1, the user 45 may not be ready to interact with the first notification 46 (e.g. answer or decline the call), and as a result, the first notification 46 expires, as shown in screen 48b at time t2. The first notification 46 may expire by being removed from the screen, as shown in screen 48b. The expiry of the first notification 46 is an example of the operation 34 of the algorithm 30.

At time t3, the user 45 may activate or connect the second user device 49 (headphones), for example, by turning on the second user device 49, and/or linking or pairing the second user device 49 with the first user device 48. In response to the second user device 49 being activated or connected, provision of a second notification 47 is initiated, as shown in screen 48c of the first user device 48. For example, the user 45 may wish to use the headphones as an audio device for the call, and it may be desirable to have the headphones ready (e.g. turned on and/or linked) before answering the call or calling back.

The provision of the second notification 47 is an example of the operation 38 of the algorithm 30.

At time t4, as seen from screen 48d, the second notification 47 is provided on the first user device 48, such that the user 45 may interact with the second notification 47. The second notification 47 may comprise a 'call back' option shown with the element 47a, such that the user 45 can call back the caller by interacting with the element 47a If the second notification 47 (e.g. without having to navigate through missed calls or notification centre).

In an example embodiment, in response to determining that the second user device 49 is activated or connected for use with the first user device 48, an action may be performed instead of providing the second notification 47. For example, the action may comprise calling back the caller when it is determined that the second user device 49 is activated or connected, rather than displaying the second notification 47.

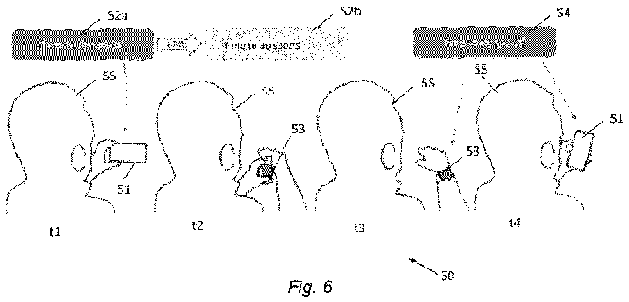

In an example embodiment, the first trigger event relates to a physical activity or health related event (e.g. seminar, personal training online meeting, gym session, sports session, streaming video (live or recorded) of a training session, meditation session, or an application reminder relating to such activities). It may be desirable to monitor physical activity (e.g. heart rate, calories burnt, or the like). As such, the second user device may comprise a smartwatch (or other fitness tracking device), the smartwatch being suitable for monitoring physical activity. The second notification may therefore be presented in response to determining that the smartwatch has been activated or connected for use with the first user device. An example of such a trigger event is described below with reference to FIG. 6.

FIG. 6 is a block diagram of a system, indicated generally by the reference numeral 60, in accordance to an example embodiment. The system 60 comprises a user 55 using a first user device 51 (e.g. a smartphone), and the user 55 and notifications on a screen of the first user device 51 are shown at time instances t1, t2, t3, and t4. At time t1, a first notification 52a is provided at first user device 51. The first notification 52a (e.g. "*time to do sports!*") relates to a first trigger event, where the first trigger event relates to a meeting corresponding to a physical activity. The provision of the first notification 52a is an example implementation of the operation 32 of the algorithm 30 described above.

The user 55 may have a second user device 53 (e.g. smartwatch) where the second user device 53 may be linked to the first user device 51. For example, at time t1, the user 55 may not be ready to interact with the first notification 52a and start the physical activity (e.g. as they are not wearing the smartwatch yet), and as a result, the first notification 52a expires, as shown in time t2 with a faded notification 52b (e.g. the first notification 52a may expire by disappearing and/or fading out of the screen of the first device 51). The expiry of the first notification 52a is an example implementation of the operation 34 of the algorithm 30.

The user 55 may activate or connect the second user device 53 (smartwatch), for example, by wearing the second user device 53, turning on the second user device 53, and/or linking or pairing the second user device 53 with the first user device 51 (thereby implementing operation 36 of the algorithm 30). In response to the second user device 53 being activated or connected, a second notification 54 may be provided at at least one of the first user device 51, as shown in time t4, and the second user device 53, as shown in time t3 (thereby implementing operation 38 of the algorithm 30). The times t3 and t4 may be the same time instance, or may be different time instances, such that the second notification 54 may be provided at the first user device 51 and second user device 53 substantially simultaneously, or at different time instances.

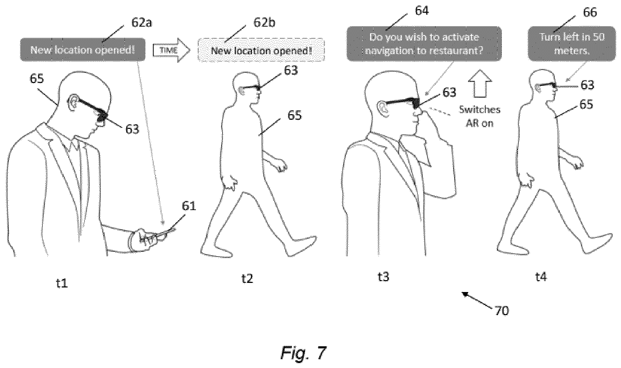

In an example embodiment, the first trigger event relates to a navigation suggestion to a location of interest. It may be desirable to view directions to the location of interest with a virtual or augmented reality headset. The second user device may comprise a virtual reality headset and/or headphones (or other audio or visual devices suitable for presenting navigation suggestions). The second notification may be presented in response to determining that the virtual reality headset and/or headphones have been activated or connected, wherein the second notification comprises navigation information of the location of interest. An example of such a trigger event is described below with reference to FIG. 7.

FIG. 7 is a block diagram of a system, indicated generally by the reference numeral 70, in accordance with an example embodiment. System 70 shows a user 65 using a first user device 61 (e.g. a smartphone), and the user 65 and notifications on a screen of the first user device 61 are shown at time instances t1, t2, t3, and t4. At time t1, a first notification 62a is provided at first user device 61. The first notification 62a (e.g. "*new location opened!*") relates to a first trigger event, where the first trigger event relates to a navigation suggestion to a location of interest (e.g. a new restaurant opening, a sightseeing location that the user wishes to visit, or the like). The user 65 may have a second user device 63 (e.g. virtual reality headset, augmented reality headset or glasses, or audio headphones). For example, the user 65 may be visiting a town while wearing glasses (e.g. prescription glasses and/or sunglasses) that have virtual or augmented reality capability, but may have the augmented reality functionality off (e.g. for power saving). At time t1, when the notification 62a is provided, the user 65 may not react to it for one or more reasons (e.g. the user may first wish to go somewhere else or do something else other than going the location of interest). As a result, the first notification 62a may expire, as shown in t2 with the faded notification 62b.

Once the user 65 is ready to go to the location of interest, the user 65 may activate or connect the second user device 63 (e.g. by switching on the augmented reality functionality of the glasses), and in response to the second user device 63 being activated or connected for use with the first user device 61, a second notification 64 (e.g. "*Do you wish to activate navigation to restaurant?*") may be provided at time t3 and at least one of the first user device 61 and the second user device 63. For example, once the user 65 confirms to start the navigation, the navigation 66 can be provided to the user 65 at time t4, for example, on the second user device 63 (e.g. augmented reality glasses). As such, the user can then follow the navigation to go to the location of interest.

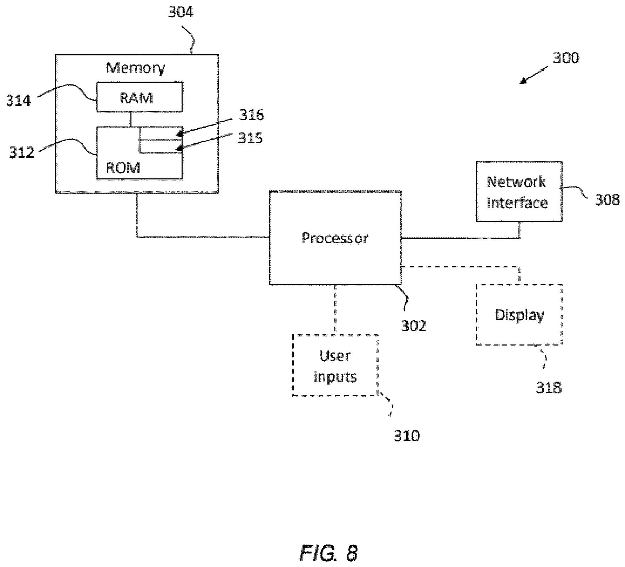

For completeness, FIG. 8 is a schematic diagram of components of one or more of the example embodiments described previously, which hereafter are referred to generically as processing systems 300. A processing system 300 may have a processor 302, a memory 304 closely coupled to the processor and comprised of a RAM 314 and ROM 312, and, optionally, user input 310 and a display 318. The processing system 300 may comprise one or more network/apparatus interfaces 308 for connection to a network/apparatus, e.g. a modem which may be wired or wireless. Interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid-state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain computer program code which, when executed by the processor implements aspects of the algorithm 30 described above. Note that in the case of small device/apparatus the memory can be most suitable for small size usage i.e. not always hard disk drive (HDD) or solid-state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts maybe all inside device/apparatus such as IoT device/apparatus i.e. embedded to very small size

In some example embodiments, the processing system 300 may also be associated with external software applications. These may be applications stored on a remote server device/apparatus and may run partly or exclusively on the remote server device/apparatus. These applications maybe termed cloud-hosted applications. The processing system 300 may be in communication with the remote server device/apparatus in order to utilize the software application stored there.

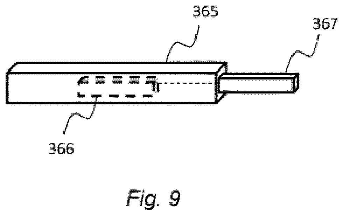

FIG. 9 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow chart of Figure 3 is an example only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. An apparatus comprising means for performing:
providing a first notification on a first user device, wherein the first notification relates to a first trigger event;
in the event that the first notification has expired, determining whether a second user device is activated or connected for use with the first user device; and
in response to determining that the second user device is activated, providing a second notification on one or more of the first user device or the second user device, wherein the second notification relates to said first trigger event.

2. An apparatus as claimed in claim 1, wherein determining whether the second user device is activated or connected for use with the first user device comprises monitoring the second user device for a first time period after said provision of the first notification or after said expiry of the first notification.

3. An apparatus as claimed in any one of the preceding claims, wherein the second notification comprises a modification of the first notification.

4. An apparatus as claimed in claim 3, wherein said modification relates to use of the second user device.

5. An apparatus as claimed in any one of the preceding claims, wherein the second notification comprises one or more actions to be performed in response to the first trigger event.

6. An apparatus as claimed in any one of the preceding claims, wherein the first trigger event relates to at least one of a call, a message, a meeting, a navigation suggestion, or an application trigger event.

7. An apparatus as claimed in any one of the preceding claims, wherein the second user device comprises one or more accessory devices linked to the first user device.

8. An apparatus as claimed in claim 7, wherein the one or more accessory devices comprises one or more of headphones, a smartwatch, a virtual reality headset, a webcam, or microphone(s).

9. An apparatus as claimed in any one of the preceding claims, wherein:
the first trigger event relates to a call or a meeting;
the second user device comprises one or more of headphones, microphone, or a webcam; and
the second notification is presented in response to determining that one or more of the headphones, microphone, and webcam has been activated or connected for use with the first user device.

10. An apparatus as claimed in any one of the preceding claims, wherein:
the first trigger event relates to a navigation suggestion to a location of interest;
the second user device comprises one or more of a virtual reality headset, or headphones; and
the said second notification is presented in response to determining that one or more of the virtual reality headset or headphones have been activated or connected for use with the first user device, wherein the second notification comprises navigation information of the location of interest.

11. An apparatus as claimed in any one of the preceding claims, wherein:
the first event relates to a physical activity or health-related event;
the second user device comprises a smartwatch, the smartwatch being suitable for monitoring physical activity; and
the second notification is presented in response to determining that the smartwatch has been activated or connected for use with the first user device.

12. An apparatus as claimed in any one of the preceding claims, wherein the second user device is associated with the first trigger event, such that the second user device is usable for interaction with the first trigger event.

13. An apparatus as claimed in any one of the preceding claims, wherein the means comprises at least one processor; and at least one memory including computer program code, the at least one memory and computer program code configured to, with the at least one processor, cause the performance of the apparatus.

14. A method comprising:
providing a first notification on a first user device, wherein the first notification relates to a first trigger event;
in the event that the first notification has expired, determining whether a second user device is activated or connected for use with the first user device; and
in response to determining that the second user device is activated, providing a second notification on one or more of the first user device or the second user device, wherein the second notification relates to said first trigger event.

15. A computer program comprising instructions for causing an apparatus to perform at least the following:
providing a first notification on a first user device, wherein the first notification relates to a first trigger event;
in the event that the first notification has expired, determining whether a second user device is activated or connected for use with the first user device; and
in response to determining that the second user device is activated, providing a second notification on one or more of the first user device or the second user device, wherein the second notification relates to said first trigger event.
